# EUROPEAN PATENT APPLICATION

(11) **EP 2 579 370 A1**
(43) Date of publication of application: **10.04.2013**
(21) Application number: 11789650.6
(22) Date of filing: 23.05.2011
(51) Int. Cl.: H01M 4/66, H01M 4/06, H01M 4/13

(54) **CURRENT COLLECTOR FOR NON-AQUEOUS ELECTROLYTE BATTERY, ELECTRODE FOR NON-AQUEOUS ELECTROLYTE BATTERY, AND NON-AQUEOUS ELECTROLYTE BATTERY**

(30) Priority: 31.05.2010 JP 2010123830
(71) Applicant: Sumitomo Electric Industries, Ltd., Chuo-ku Osaka-shi Osaka 541-0041 (JP)
(72) Inventor: OTA, Nobuhiro, Osaka-shi Osaka 554-0024 (JP); HOSOE, Akihisa, Osaka-shi Osaka 554-0024 (JP); MAJIMA, Masatoshi, Osaka-shi Osaka 554-0024 (JP); NITTA, Koji, Osaka-shi Osaka 554-0024 (JP)
(74) Representative: Setna, Rohan P.
(86) International application number: PCT/JP2011/061780
(87) International publication number: WO 2011/152241

(57) **Abstract**

To provide a current collector for a nonaqueous electrolyte battery capable of improving the discharge capacity and charge/discharge efficiency of a battery, in which the content of oxygen in the surface of an aluminum porous body is low. The current collector for a nonaqueous electrolyte battery is made of an aluminum porous body, and the content of oxygen in the surface of the aluminum porous body is 3.1% by mass or less. Further, the aluminum porous body is made of an aluminum alloy containing at least one element selected from the group consisting of Cr, Mn and transition metal elements. The aluminum porous body can be prepared by a production method in which, after an aluminum alloy layer 2 is formed on the surface of a resin 1 of a resin body 1f having continuous pores, the resin body is heated to a temperature of the melting point of the aluminum alloy or less to thermally decompose the resin body 1f (resin 1) while applying a potential lower than the standard electrode potential of aluminum to the aluminum alloy layer 2 with the resin body (aluminum alloy layer-coated resin body 3) dipped in a molten salt.

## Description

### TECHNICAL FIELD

The present invention relates to a current collector for a nonaqueous electrolyte battery of an aluminum porous body, an electrode for a nonaqueous electrolyte battery in which an aluminum porous body is filled with an active material, and a nonaqueous electrolyte battery including the electrode.

### BACKGROUND ART

A nonaqueous electrolyte battery is considered to be used for handheld terminals, electric vehicles and domestic power storage apparatus because it has a high voltage, a high capacity and a high energy density. In recent years, research and development are being actively made for the nonaqueous electrolyte battery. Typical examples of the nonaqueous electrolyte battery include a lithium primary battery and a lithium ion secondary battery (hereinafter, merely referred to as a "lithium type battery"). The lithium ion secondary battery is configured to place a positive electrode and a negative electrode on opposite sides of an electrolyte, and charge or discharge thereof is performed by transfer of lithium ions between the positive electrode and the negative electrode. Generally, a current collector bearing a mixture containing an active material is used for the positive electrode and the negative electrode.

It is known that, for example, a metal foil of aluminum, or a porous metal body of aluminum having a three-dimensional porous structure is used for the current collector of positive electrode. As the porous metal body of aluminum, an aluminum foam formed by foaming aluminum is known. For example, in Patent Literature 1 is disclosed a method of producing an aluminum foam in which, in a state where aluminum is molten, a foaming agent and a thickener are added to thereto and the resulting mixture is stirred. This aluminum foam includes many closed cells (closed pores) by the feature of the production method.

By the way, as the porous metal body, a nickel porous body (e.g., Celmet (registered trademark)) having continuous pores and a porosity of 90% or more is widely known. The nickel porous body is produced by forming a nickel layer on the surface of the skeleton of a foamed resin having continuous pores such as a foamed urethane, and then thermally decomposing the foamed resin to remove, and further reducing nickel. However, if the nickel porous body is used in a current collector of a lithium type battery, there is a problem that nickel is corroded. For example, if the nickel porous body is filled with a slurry mixture of positive electrode materials containing the positive electrode active material mainly containing a transition metal oxide, the nickel porous body is corroded by the slurry mixture of positive electrode materials exhibiting strong alkalinity. In addition to this, if an organic electrolytic solution is used as an electrolyte, there is another problem that electrolytic solution resistance of the nickel porous body is deteriorated when the potential of the nickel porous body of the current collector in the organic electrolytic solution becomes high. On the other hand, if the material composing a porous metal body is aluminum, such problems do not arise even for the current collector of a lithium type battery.

Then, research and development of a production method of the aluminum porous body, to which the production method of a nickel porous body is applied, are performed. For example, in Patent Literature 2 is disclosed a method of producing an aluminum porous body. In this production method, a metal film, in which a eutectic alloy is formed at a temperature of the melting point of Al or less, is formed on the skeleton of a foamed resin having a three-dimensional network structure by a plating method or a gas phase method such as a vapor deposition method. Thereafter, the foamed resin having the formed metal film is impregnated with a paste predominantly composed of an Al powder, a binder and an organic solvent, and then thermally treated at a temperature of 550°C or more and 750°C or less in a non-oxidizing atmosphere.

### CITATION LIST

### PATENT LITERATURES

Patent Literature 1: Japanese Unexamined Patent Publication No. 2002-371327
Patent Literature 2: Japanese Unexamined Patent Publication No. 8-170126

### NON-PATENT LITERATURE

Non-Patent Literature 1: edited by David Linden, translation supervised by Tsutomu Takamura, "HANDBOOK OF BATTERIES", Asakura Publishing Co., Ltd., Dec. 20, 1996, First Edition, p. 219, 231, 651

### SUMMARY OF INVENTION

### (TECHNICAL PROBLEM)

However, there is a problem that all of conventional aluminum porous metal bodies are not suitable for use in a current collector of an electrode for a nonaqueous electrolyte battery.

Since an aluminum foam of the above-mentioned aluminum porous metal bodies has many closed cells because of features of the production method thereof, it is impossible to use the whole surface of the foam effectively even if the surface area of the foam is increased by foaming. That is, the internal space of the closed cells (closed pores) is a useless space that cannot be filled with an active material. Therefore, the aluminum foam is originally not suitable for use in a current collector of the electrode for a nonaqueous electrolyte battery.

On the other hand, in an aluminum porous body produced by applying the production method of a nickel porous body, an Al powder causes a eutectic reaction at an interface with a metal film in the thermal treatment step, and the Al powder has to be heated to a temperature at which sintering of the Al powder proceeds. Therefore, oxidation of the surface of the aluminum porous body proceeds until the porous body is cooled, and an oxide film tends to be formed on the surface. Moreover, when the aluminum porous body is oxidized once, it is difficult to reduce the oxide film at a temperature of the melting point or less. Therefore, in conventional aluminum porous bodies, the content of oxygen in the surface is high and electric resistance of the surface is high. Therefore, when the aluminum porous body in which the content of oxygen in the surface is high is used in the current collector of the electrode for a nonaqueous electrolyte battery, there is a possibility that the electron conduction between the porous body and the active material is inhibited and the discharge characteristic of a battery is deteriorated.

By the way, most positive electrodes for nonaqueous electrolyte batteries (particularly, lithium type batteries) commonly put to practical use at present are produced by applying a mixture of positive-electrode materials containing a positive electrode active material onto the surface of the aluminum foil to be formed into a current collector. Further, as the form of the nonaqueous electrolyte battery, a coin type battery is known. In the coin type battery, power generating elements laminated with an electrolyte interposed between the positive electrode and the negative electrode (for example, a lithium metal foil or a lithium alloy foil) is housed in a coin type battery case. The battery case has a metallic positive electrode can and a metallic negative electrode can, and the power generating elements are housed in a space which the positive electrode can forms with the negative electrode can, and the positive electrode can and the negative electrode can are sealed with a resin gasket (e.g., refer to FIG. 14.40, FIG. 14.64 and FIG. 36.56 of Non-Patent Literature 1). In the above-mentioned coin type battery, the positive electrode can contacts the positive electrode (current collector of positive electrode) and the negative electrode can contacts the negative electrode (current collector of negative electrode), and thereby a battery case (the positive electrode can and the negative electrode can) also serves as an electrode terminal (a positive electrode terminal and a negative electrode terminal).

In the above-mentioned electrode using an aluminum foil in the current collector, in the case of a secondary battery, since the expansion and shrinkage of the active material occurs in association with transfer of lithium ions during charge/discharge, changes in volume (changes in thickness) occurs as a whole electrode. Therefore, for example, when charge/discharge is performed in the above-mentioned coin type battery, contact between the electrode (current collector) and the electrode terminal member (positive electrode can or negative electrode can) becomes unstable due to changes in thickness of the electrode particularly at the end of charge/discharge, and the discharge capacity which can be actually taken out decreases compared with the designed discharge capacity. On the other hand, in the case of a primary battery in which a lithium metal foil is used in the negative electrode, the thickness of the negative electrode is decreased in association with progression of discharge and the thickness of the whole power generating element formed by laminating the positive electrode, the electrolyte and the negative electrode decreases. Therefore, for example, in the above-mentioned coin type battery, contact between the electrode (current collector) and the electrode terminal member (positive electrode can or negative electrode can) becomes unstable at the end of discharge, and the discharge capacity which can be actually taken out decreases compared with the designed discharge capacity.

In order to solve the above-mentioned problems, it is conceivable that a leaf spring is inserted between the electrode and the electrode terminal member to absorb the volume change of the electrode in association with charge/discharge, but in this case, the battery case becomes larger accordingly. That is, energy of the battery per unit volume decreases.

The present invention was made in view of the above-mentioned situations, and an object thereof is to provide a current collector for a nonaqueous electrolyte battery capable of improving the discharge capacity and charge/discharge efficiency of a battery, in which the content of oxygen in the surface of an aluminum porous body is low. Another object of the present invention is to provide an electrode for a nonaqueous electrolyte battery capable of improving the discharge capacity and charge/discharge efficiency of a battery, in which the content of oxygen in the surface of an aluminum porous body serving as a current collector is low, and a nonaqueous electrolyte battery using the electrode for a nonaqueous electrolyte battery.

### (SOLUTION TO PROBLEM)

(1) A current collector for a nonaqueous electrolyte battery of the present invention is made of an aluminum porous body, and the content of oxygen in the surface of the aluminum porous body is 3.1% by mass or less. Further, the aluminum porous body is made of an aluminum alloy containing at least one element selected from the group consisting of Cr, Mn and transition metal elements.
An electrode for a nonaqueous electrolyte battery of the present invention is formed by filling an aluminum porous body with an active material, wherein the aluminum porous body is the above-mentioned current collector for a nonaqueous electrolyte battery of the present invention.

Since the active material contacts the surface of the aluminum porous body serving as a current collector, and electron transfer between the porous body and the active material is performed during the charge/discharge of a battery, properties of the surface of the porous body have an influence on the discharge characteristic of a battery. In accordance with the above-mentioned constitution, since the content of oxygen in the surface of the aluminum porous body is 3.1% by mass or less and the content is low compared with conventional aluminum porous bodies, and electric resistance of the surface of the porous body is low, the discharge characteristic (particularly high-rate discharge characteristic) of a battery can be improved. The content of oxygen referred to herein refers to a value obtained by quantitatively analyzing the surface of the aluminum porous body at an accelerating voltage of 15 kV by using EDX (energy dispersive X-ray analysis). The range of the content of oxygen of 3.1% by mass or less is below the detection limit of EDX. Specific analyzing apparatus will be described later.

The above-mentioned electrode has a structure in which the continuous pores of the aluminum porous body is filled with an active material and particles of the active material are dispersed in the aluminum porous body. Therefore, even when the expansion and shrinkage of the active material occurs in association with charge/discharge, the active material is held within the aluminum porous body. Therefore, changes in volume (changes in thickness) in association with charge/discharge is small as a whole electrode. Moreover, the aluminum porous body is structurally elastic. For example, in the primary battery, by housing the electrode in a battery case in a state of being compressed (elastically deformed) in the thickness direction, the electrode becomes thick by resilience of the aluminum porous body even if the thickness of the negative electrode is decreased in association with progression of discharge. Accordingly, the thickness of the whole power generating element is easily maintained. Therefore, the discharge capacity and charge/discharge efficiency of a battery can be improved.

Further, since the aluminum porous body is made of an aluminum alloy containing at least one of the above-mentioned additive elements (Cr, Mn and transition metal elements), the aluminum porous body is superior in mechanical characteristics such as rigidity and elasticity to an aluminum porous body formed of pure aluminum. Therefore, the holding performance of the active material is excellent, and reductions in the discharge capacity and charge/discharge efficiency of a battery can be inhibited.

The total content of the additive elements is, for example, 2 atomic % or more and 10 atomic % or less, and preferably 5 atomic % or more and 7 atomic % or less. When the total content of the additive elements is 2 atomic % or more, the effect of improving mechanical characteristics is large. When the total content is 10 atomic % or less, high conductivity is easily secured.

Moreover, since the content of oxygen in the surface of the aluminum porous body is 3.1% by mass or less, the porous body is resistant to cracks and is easy to deform in pressure-forming the porous body after filling with the active material, compared with conventional aluminum porous bodies in which the content of oxygen in the surface is high. Therefore, it is possible to improve the density of the electrode (filling density of the active material) and to improve the adhesiveness between the porous body and the active material by pressure-forming the porous body while maintaining the current collecting performance of the porous body. The density of the electrode may be 2.4 g/cm³ or more and 2.8 g/cm³ or less, for example.

(2) The above-mentioned transition metal element may be at least one element selected from the group consisting of Fe, Co, Ni, Cu and Ti.

It is possible to improve mechanical characteristics such as rigidity and elasticity by adding the above-mentioned transition metal elements to the aluminum alloy.

(3) The aluminum alloy preferably has a structure containing a quasicrystal.

The aluminum alloy containing a predetermined amount of the above-mentioned additive elements can have a structure containing the quasicrystal. It is possible to improve mechanical characteristics such as rigidity and elasticity by having the structure containing the quasicrystal. The structure containing the quasicrystal referred to herein is a structure in which fine quasicrystal is uniformly dispersed in the aluminum crystal, and is known as the so-called quasicrystal-dispersed aluminum alloy.

(4) In an aspect of the electrode for a nonaqueous electrolyte battery of the present invention, the aluminum porous body is further filled with a solid electrolyte.

As the electrolyte of the nonaqueous electrolyte battery, the solid electrolyte can be used besides the organic electrolytic solution. By using the solid electrolyte, a solid-state nonaqueous electrolyte battery can be realized. In accordance with the above-mentioned constitution, the electrode can be made suitable for an electrode of the solid-state nonaqueous electrolyte battery. Specifically, by using an electrode in which the aluminum porous body is filled with the active material and the solid electrolyte, diffusibility of lithium ions within the electrode can be improved and a solid-state lithium type battery having an excellent discharge characteristic can be attained.

(5) The solid electrolyte, with which the above-mentioned aluminum porous body is filled, is a sulfide-based solid electrolyte containing lithium, phosphorus and sulfur.

In accordance with the above-mentioned constitution, since the sulfide-based solid electrolyte having high lithium ion conductivity is used, the solid-state lithium type battery having a more excellent discharge characteristic can be attained.

In addition, the pore diameter of the aluminum porous body is appropriately set within a range of 5 to 500 µm, for example. Further, the pore diameter and the thickness (corresponding to the thickness of an electrode) of the porous body is preferably changed in accordance with the type of the electrolyte (organic electrolytic solution or solid electrolyte) to be used for a battery. In the case of an organic electrolytic solution, the pore diameter is, for example, more than 50 µm, and preferably 100 µm or more because it is conceivable that the pore diameter is preferably increased in accordance with the thickness of the electrode so that the electrolytic solution can easily penetrate into the electrode. On the other hand, in the case of a solid electrolyte, an interface between the electrode and the solid electrolyte is a joint interface between solids, and lithium ions are transferred between the electrode and the solid electrolyte at the joint interface. Therefore, an excessively thick electrode causes the availability ratio of the active material to decrease. Accordingly, in the case of a solid electrolyte, by setting the thickness of the electrode at 20 µm or more and less than 200 µm, and setting the pore diameter of the porous body at 10 µm or more and 50 µm or less, the adhesiveness between the porous body and the active material can be improved and the contact area therebetween can be increased. The pore diameter referred to herein refers the mean pore diameter and a value measured through observation with a microscope.

On the other hand, the porosity of the aluminum porous body is appropriately set within a range of 80 to 98%. By setting the porosity of the porous body at 80% or more, a space filled with the active material is secured. By setting the porosity at 98% or less, skeleton strength of the porous body is maintained and the shape of the porous body is easily kept. Particularly, when the porosity of the porous body is 90% or more, a sufficient space filled with the active material is secured and the battery density is easily improved. The porosity referred to herein is a value calculated by measuring the mass and the apparent volume of the aluminum porous body using the Archimedes method from the specific gravity of the aluminum metal composing the aluminum porous body.

(6) A nonaqueous electrolyte battery of the present invention includes the above-mentioned electrode for a nonaqueous electrolyte battery of the present invention.

In accordance with the above-mentioned constitution, a nonaqueous electrolyte battery having an excellent discharge characteristic can be obtained. Particularly, in the electrode for a nonaqueous electrolyte battery of the present invention, it is preferable that the aluminum porous body is filled with the positive electrode active material, and the electrode is used in the positive electrode of a battery. The nonaqueous electrolyte battery referred to herein includes both of a primary battery and a secondary battery. More specifically, it includes lithium type batteries such as a lithium primary battery and a lithium ions secondary battery.

### (ADVANTAGEOUS EFFECTS OF INVENTION)

In the current collector for a nonaqueous electrolyte battery of the present invention, the content of oxygen in the surface of the aluminum porous body is low and therefore the discharge characteristic of a battery can be improved. Further, since the aluminum porous body is formed of an aluminum alloy containing predetermined additive elements, the holding performance of the active material of the aluminum porous body is excellent, and reductions in the discharge capacity and charge/discharge efficiency of a battery can be inhibited.

The electrode for a nonaqueous electrolyte battery of the present invention is formed by filling the current collector for a nonaqueous electrolyte battery of the present invention made of the above-mentioned aluminum porous body with the active material. The electrode for a nonaqueous electrolyte battery of the present invention enables improvement in the discharge characteristic of a battery and improvement in the discharge capacity and the charge/discharge efficiency of a battery. Moreover, the nonaqueous electrolyte battery of the present invention is superior in a discharge characteristic by including the above-mentioned electrode for a nonaqueous electrolyte battery of the present invention.

### BRIEF DESCRIPTION OF DRAWINGS

FIG. 1 is a schematic view showing a production step of an aluminum porous body. FIG. 1(A) is an enlarged sectional view of a part of a resin body having continuous pores. FIG. 1(B) is a view showing a state in which an aluminum layer is formed on the surface of a resin composing the resin body. FIG. 1(C) is a view showing an aluminum porous body in which the resin body is thermally decomposed to remove the resin while leaving the aluminum layer.
FIG. 2 is a schematic view showing a thermal decomposition step of the resin body in a molten salt.

### DESCRIPTION OF EMBODIMENTS

Hereinafter, embodiments of the present invention will be described. The present invention is not limited to the following embodiments.

The electrode for a nonaqueous electrolyte battery of the present invention can be produced by filling an aluminum porous body, in which the content of oxygen in the surface is 3.1% by mass or less, with the active material. A method of producing an electrode for a nonaqueous electrolyte battery of the present invention will be described below.

First, the aluminum porous body to be a current collector can be prepared, for example, by a production method including the following steps.
Production method: an aluminum alloy layer is formed on the surface of a resin of a resin body having continuous pores. Thereafter, the resin body is heated to a temperature of the melting point of the aluminum alloy or less to thermally decompose the resin body while applying a potential lower than the standard electrode potential of aluminum to the aluminum alloy layer with the resin body dipped in a molten salt.

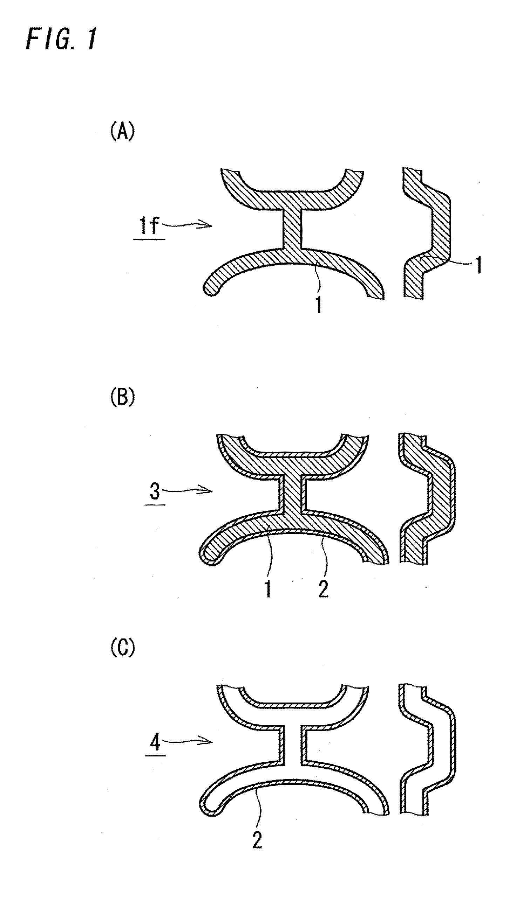

The above-mentioned production method of an aluminum porous body will be described in reference to FIG. 1.

### (Resin Body Having Continuous Pores)

FIG. 1(A) illustrates a partial enlarged sectional view of a resin body 1f having continuous pores. In the resin body 1f, the continuous pores are made in a resin 1 as a skeleton. The resin body having the continuous pores may be, besides a foamed resin, a nonwoven fabric made of a resin fiber. The resin constituting the resin body may be any resin that can be thermally decomposed at a heating temperature that is equal to or lower than the melting point of aluminum. Examples thereof include polyurethane, polypropylene, and polyethylene. Preferably, the pore diameter of the resin body is from about 5 to 500 µm, and the porosity thereof is from about 80 to 98%. The pore diameter and the porosity of the finally obtained aluminum porous body is affected by the pore diameter and the porosity of the resin body. Thus, the pore diameter and the porosity of the resin body are decided in accordance with the pore diameter and the porosity of the aluminum porous body to be formed.

In particular, a urethane foam is high in porosity, uniform in pore diameter, and excellent in pore-continuity and thermal decomposability; thus, it is preferred to use, for the resin body, a urethane foam.

### (Formation of Aluminum Alloy Layer onto Resin Surface)

FIG. 1(B) illustrates a situation that an aluminum alloy layer 2 is formed on the surface of the resin 1 of the resin body having the continuous pores (i.e., an aluminum alloy-layer-coated resin body 3). Examples of a method for forming the aluminum alloy layer include (i) a gas phase method (PVD method), typical examples of which include a vacuum vapor deposition, a sputtering method and a laser ablation method, (ii) a plating method, and (iii) a paste painting method.

### (i) Gas Phase Method

In the vacuum vapor deposition, for example, an electron beam is radiated onto the aluminum alloy as a raw material to melt and vaporize the aluminum alloy to deposit the aluminum alloy onto the resin surface of the resin body having the continuous pores, whereby the aluminum alloy layer can be formed. In the sputtering method, for example, plasma is radiated onto an aluminum alloy target to gasify the aluminum alloy so as to be deposited onto the resin surface of the resin body having the continuous pores, whereby the aluminum alloy layer can be formed. In the laser ablation method, for example, the aluminum alloy is molten and vaporized by irradiation with a laser to deposit the aluminum alloy onto the resin surface of the resin body having the continuous pores, whereby the aluminum alloy layer can be formed.

### (ii) Plating Method

A matter or object can be hardly plated with an aluminum alloy in an aqueous solution for practical use. Thus, according to a molten salt electroplating method wherein plating with an aluminum alloy is attained in a molten salt, the aluminum alloy layer can be formed on the resin surface of the resin body having the continuous pores. In this case, it is preferred to subject the resin surface beforehand to an electrically conducting treatment, and then plate the surface with an aluminum alloy in a molten salt.

The molten salt used in the molten salt electroplating may be, for example, lithium chloride (LiCl), sodium chloride (NaCl), potassium chloride (KCl), aluminum chloride (AlCl₃), or some other salt. The molten salt may be a eutectic molten salt wherein two or more salts are mixed with each other. It is favorable to render the molten salt the eutectic molten salt since the molten salt can be lowered in melting temperature. This molten salt needs to contain aluminum ions and additive element (Cr, Mn, and transition metal elements) ions.

In the molten salt electroplating, use is made of, for example, a multi-component salt of AlCl₃, XCl wherein X is an alkali metal, and MClₓ wherein M is an additive element selected from Cr, Mn and transition metal elements; this salt is molten to prepare a plating liquid; and then the resin body is immersed in this liquid to conduct electroplating, thereby plating the surface of the resin with an aluminum alloy. It is preferred to conduct, as a pretreatment for the electroplating, an electrically conducting treatment beforehand onto the resin surface. Examples of the electrically conducting treatment include a treatment of plating the resin surface with a conductive metal such as nickel by electroless plating, a treatment of coating the resin surface with a conductive metal such as aluminum or an aluminum alloy by a vacuum vapor deposition or a sputtering method, and a treatment of painting a conductive paint containing conductive particles made of carbon or some other thereonto.

### (iii) Paste painting method

In the paste painting method, use is made of, for example, an aluminum alloy paste wherein an aluminum alloy powder, a binder, and an organic solvent are mixed with each other. The aluminum alloy paste is painted onto the resin surface, and then heated to remove the binder and the organic solvent and further sinter the aluminum alloy paste. The sintering may be performed once, or may be dividedly performed plural times. For example, by painting the aluminum alloy paste onto the resin body, heating the resin body at low temperature to remove the organic solvent, and then heating the resin body in the state of being immersed in a molten salt, the resin body can be thermally decomposed and simultaneously the aluminum alloy paste can be sintered. The sintering is preferably performed in a non-oxidizing atmosphere.

### (Thermal Decomposition of Resin Body in Molten Salt)

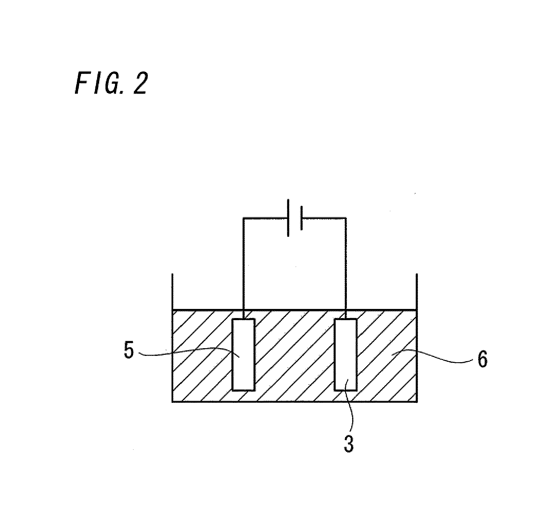

FIG. 1(C) illustrates a situation that from the aluminum alloy-layer-coated resin body 3 illustrated in FIG. 1(B), the resin is removed by decomposing the resin 1 thermally while the aluminum alloy layer is caused to remain (i.e., the aluminum porous body 4). The thermal decomposition of the resin body (resin) is attained by heating the body at the melting point of the aluminum alloy or lower while a low potential is applied to the aluminum alloy layer in the state that the body is immersed in a molten salt. As illustrated in, for example, FIG. 2, the resin body on the surface of which the aluminum alloy layer is formed (i.e., the aluminum alloy-layer-coated resin body 3) and a counter electrode (positive electrode) 5 are immersed in a molten salt 6, and a potential lower than the standard electrode potential of aluminum is applied to the aluminum alloy layer. By the application of the lower potential to the aluminum alloy layer in the molten salt, the oxidation of the aluminum alloy layer can be certainly prevented. The potential applied to the aluminum alloy layer is made lower than the standard electrode potential of aluminum and further higher than the potential for reducing the cation of the molten salt. For the counter electrode, any material that is insoluble in the molten salt may be used, and the material may be, for example, platinum or titanium.

While this state is kept, the molten salt 6 is heated to a temperature which is equal to or lower than the melting point (about 700 to 1000°C) of the aluminum alloy and is further equal to or higher than the thermal decomposition temperature of the resin body, thereby removing only the resin from the aluminum alloy-layer-coated resin body 3. In this way, the resin can be thermally decomposed without oxidizing the aluminum alloy layer. As a result, the aluminum porous body can be yielded wherein the oxygen content in the surface is 3.1% by mass or less. It is advisable to properly set the heating temperature for decomposing the resin body thermally in accordance with the kind of the resin constituting the resin body. For example, the temperature is preferably set into the range of 500°C or more and 600°C or less.

The molten salt used in the step of decomposing the resin body thermally may the same as used in the above-mentioned molten salt electroplating. The salt preferably contains at least one selected from the group consisting of lithium chloride (LiCl), sodium chloride (NaCl), potassium chloride (KCl), and aluminum chloride (AlCl₃). The molten salt may be a halide salt of an alkali metal or an alkaline earth metal to make the potential of the aluminum alloy layer lower. In order to make the melting temperature of the molten salt equal to or lower than the melting point of the aluminum alloy, two or more salts may be mixed with each other to prepare a eutectic molten salt. In the step of decomposing the resin body thermally, the use of the eutectic molten salt is effective since aluminum as a main component of the aluminum alloy particularly is easily oxidized and does not undergo a reducing treatment easily.

The aluminum porous body produced by the aluminum-porous-body-producing method is in a hollow fiber form in light of characteristics of the production method. In this point, the aluminum porous body is different from the aluminum foamed body disclosed in Patent Literature 1. The aluminum porous body has continuous pores, and has no closed pores. Alternatively, even when the aluminum porous body has closed pores, the volume of the pores is very small. The aluminum porous body may be made of an aluminum alloy containing a certain additive element (a body made of an additive element, and the balance composed of aluminum and inevitable impurities). When the aluminum porous body is made of the aluminum alloy, mechanical characteristics of the aluminum porous body can be made better than when the body is made of pure aluminum.

The aluminum alloy contains at least one element selected from the group consisting of Cr, Mn and transition metal elements as an additive element. Examples of the transition metal element include at least one element selected from the group consisting of Fe, Co, Ni, Cu and Ti.
Further, the aluminum alloy is preferably the so-called quasicrystal-dispersed aluminum alloy which contains a predetermined amount of the above-mentioned additive elements and has a structure in which fine quasicrystals are uniformly dispersed in the aluminum crystal. The total content of the additive elements is, for example, 2 atomic % or more and 10 atomic % or less, and preferably 5 atomic % or more and 7 atomic % or less.

Herein, in order to prepare an aluminum porous body formed of the quasicrystal-dispersed aluminum alloy, the aluminum alloy layer may be formed so as to have a structure of the quasicrystal-dispersed alloy. For example, when the aluminum alloy layer is formed by a gas phase method (PVD) as described above, a quasicrystal-dispersed aluminum alloy phase can be formed by plating the resin surface with an aluminum alloy while cooling the resin body, which is an object to be coated. Further, for example, when the aluminum alloy layer is formed by paste a application method, an aluminum alloy paste, in which the quasicrystal-dispersed aluminum alloy powder is mixed, is used. The quasicrystal-dispersed aluminum alloy powder can be obtained, for example, by mixing aluminum and additive elements in a predetermined proportion, heating to melt the resulting mixture, and then spraying and rapidly cooling the mixture.

### (Active Material With Which Aluminum Porous Body Is Filled)

Next, as the active material with which the aluminum porous body is filled, a material from and into which lithium is removed/inserted can be used. By filling the aluminum porous body with such a material, an electrode suitable for the lithium ion secondary battery can be attained. Examples of materials of the positive electrode active material include transition metal oxides such as lithium cobaltate (LiCoO₂), lithium nickel oxide (LiNiO₂), lithium nickel cobalt oxide (LiCo_{0.3}Ni_{0.7}O₂), lithium manganese oxide (LiMn₂O₄), lithium titanate (Li₄Ti₅O₁₂), lithium manganese oxide (LiM_{y}Mn_{2-y}O₄; M = Cr, Co, Ni), and lithium iron phosphate and a compound thereof (olivine compound) (LiFePO₄, LiFe_{0.5}Mn_{0.5}PO₄). The transition metal element contained in these materials may be partially replaced with another transition metal element.

Examples of other positive electrode active materials include sulfide-based chalcogen compounds such as TiS₂, V₂S₃, FeS, FeS₂, and LiMSₓ (M is a transition metal element such as Mo, Ti, Cu, Ni, or Fe, or Sb, Sn, or Pb); and lithium metals having a skeleton of a metal oxide such as TiO₂, Cr₃O₈, V₂O₅, or MnO₂. Herein, the above-mentioned lithium titanate (Li₄Ti₅O₁₂) can also be used as a negative electrode active material.

### (Solid Electrolyte With Which Aluminum Porous Body is Filled)

The aluminum porous body may be further filled with a solid electrolyte in addition to the active material. When the aluminum porous body is filled with the active material and the solid electrolyte, the electrode can be made suitable for an electrode of the solid-state nonaqueous electrolyte battery. However, the ratio of the active material in the materials with which the aluminum porous body is filled is 50% by mass or more, and more preferably 70% by mass or more from the viewpoint of securing the discharge capacity.

For the solid electrolyte, a sulfide-based solid electrolyte having high lithium ion conductivity is preferably used. Examples of the sulfide-based solid electrolyte include sulfide-based solid electrolytes containing lithium, phosphorus and sulfur. The sulfide-based solid electrolyte may further contain elements such as O, Al, B, Si, and Ge.

The sulfide-based solid electrolyte can be obtained by a publicly known method. Examples thereof include a method in which lithium sulfide (Li₂S) and diphosphorus pentasulfide (P₂S₅) are prepared as starting materials, Li₂S and P₂S₅ are mixed in the ratio of about 50 : 50 to 80 : 20 by mole, and the resulting mixture is molten and quenched (melting and rapid quenching method), and a method of mechanically milling this (mechanical milling method).

The sulfide-based solid electrolytes obtained by the above-mentioned method are amorphous. It is possible to use the sulfide-based solid electrolyte in this amorphous state, or a crystalline sulfide-based solid electrolyte obtained by heating the amorphous sulfide-based solid electrolyte may be used. By crystallization of the sulfide-based solid electrolyte, improvement in lithium ion conductivity can be expected.

### (Filling of Aluminum Porous Body With Active Material)

Filling with the active material (active material and solid electrolyte) can be performed by a publicly known method such as a dipping filling method or a coating method. Examples of the coating method include a roll coating method, an applicator coating method, an electrostatic coating method, a powder coating method, a spray coating method, a spray coater coating method, a bar coater coating method, a roll coater coating method, a dip coater coating method, a doctor blade coating method, a wire bar coating method, a knife coater coating method, a blade coating method, and a screen printing method.

When the porous body is filled with the active material (active material and solid electrolyte), for example, a conduction aid or a binder is added as required, and an organic solvent is mixed to prepare a slurry mixture of positive electrode materials. The aluminum porous body is filled with this slurry by the above-mentioned method. Filling of the porous body with the active material (active material and solid electrolyte) is preferably performed in an atmosphere of inert gas in order to prevent the oxidation of the aluminum porous body. As the conduction aid, for example, carbon black such as acetylene black (AB) or Ketjen black (KB) can be used. As the binder, for example, polyvinylidene fluoride (PVDF) and polytetrafluoroethylene (PTFE) can be used.

The organic solvent used in preparing a slurry mixture of positive electrode materials can be appropriately selected as long as it does not have an adverse effect on the materials (i.e., the active material, solid electrolyte, conduction aid, and binder) with which the aluminum porous body is filled. Examples of the organic solvents include n-hexane, cyclohexane, heptane, toluene, xylene, trimethylbenzene, dimethyl carbonate, diethyl carbonate, ethyl methyl carbonate, propylene carbonate, ethylene carbonate, butylene carbonate, vinylene carbonate, vinyl ethylene carbonate, tetrahydrofuran, 1,4-dioxane, 1,3-dioxolane, ethylene glycol, and N-methyl-2-pyrolidone.

The electrode for a nonaqueous electrolyte battery thus produced is an electrode formed by filling an aluminum porous body with the content of oxygen in the surface of 3.1% by mass or less with the active material. Further, since the aluminum porous body has continuous pores and does not have closed pores, the whole surface of the porous body can be used for contact with the active material. Further, by pressure-forming the aluminum porous body after it is filled with the active material, the density of the electrode and the adhesiveness between the porous body and the active material can be improved.

Hereinafter, specific examples of the present invention will be described.

### [Test Example 1]

### (Preparation of Aluminum Porous Body)

As the resin body, a polyurethane foam (foamed urethane) having a porosity of about 95%, a pore diameter of about 100 µm and a thickness of about 500 µm was prepared.

Next, an aluminum alloy composed of 95 atomic % of Al and 5 atomic % of Cr was prepared. Using the aluminum alloy as a target, an aluminum alloy layer was formed on the resin surface of the resin body by a DC sputtering method. DC sputtering was carried out under the conditions of a vacuum degree of 1.0 x 10⁻⁵ Pa and the distance between the target and the resin body of 140 mm while cooling the resin body as the object to be coated to room temperature. After the aluminum alloy layer containing Cr in an amount of 5 atomic % was formed at the resin surface of the resin body, the resin body (aluminum alloy layer-coated resin body), having the aluminum alloy layer formed at the resin surface, was observed by SEM. As a result, the thickness of the aluminum alloy layer was 15 µm.

The aluminum alloy layer-coated resin body was dipped in a molten salt of LiCl-KCl eutectic crystal of 500°C. In this state, a negative voltage was applied to the aluminum alloy layer for 30 minutes so that the potential of the aluminum alloy layer is lower by 1 V than the standard electrode potential of aluminum. At this time, air bubbles were observed in the molten salt. It is estimated that the air bubbles are generated due to the thermal decomposition of polyurethane.

Next, a skeleton (aluminum porous body) made of the aluminum alloy, remaining after the resin body obtained in the above-mentioned step was thermally decomposed, was cooled to room temperature in the atmosphere, and washed with water to remove the molten salt adhering to the surface. By the above-mentioned procedure, an aluminum porous body, which was made of the aluminum alloy containing Cr in an amount of 5 atomic %, was completed.

The prepared aluminum porous body had a porosity of 95%, a pore diameter of 100 µm and a thickness of 500 µm. The aluminum porous body was observed by SEM. As a result, the pores continued to one another and no closed pore was found. Next, the structure of the aluminum alloy composing the aluminum porous body was observed by an X-ray small angle scattering method. As a result, this alloy was found to be a quasicrystal-dispersed aluminum alloy. Moreover, the surface of the aluminum porous body was quantitatively analyzed at an accelerating voltage of 15 kV by using EDX. As a result, no peak of oxygen was observed. That is, oxygen was not detected. Accordingly, the content of oxygen in the surface of the aluminum porous body is below the detection limit of EDX, that is, 3.1% by mass or less. The apparatus used in this analysis was "EDAX Phonenix model No.: HIT22 136-2.5" manufactured by EDAX Inc.

Finally, a sample with a diameter of 15 mm was cut out from the aluminum porous body and used as an aluminum porous body sample 1.

Further, aluminum porous body samples 2 and 3 made of an aluminum alloy containing different additive elements were prepared by the same method as in the aluminum porous body sample 1 except for changing the aluminum alloy to be prepared. Specifically, the aluminum porous body sample 2 was formed of an aluminum alloy containing Mn in an amount of 5 atomic %, and the other aluminum porous body sample 3 was formed of an aluminum alloy containing Fe in an amount of 5 atomic %. In both of the aluminum porous body samples 2 and 3, the aluminum alloy was a quasicrystal-dispersed aluminum alloy.

### (Production of Electrode for Nonaqueous Electrolyte Battery)

The aluminum porous body sample 1 was filled with the active material to produce a positive electrode for a lithium type battery.

A MnO₂ powder (positive electrode active material) having an average particle diameter of 5 µm was prepared, and the MnO₂ powder, AB (conduction aid), and PVDF (binder) were mixed in a ratio of 90 : 5 : 5 by mass %. To this mixture, N-methyl-2-pyrolidone (organic solvent) was added dropwise, and the resulting mixture was stirred to prepare a paste-like slurry mixture of positive electrode materials. Next, the aluminum porous body sample 1 was impregnated with the slurry mixture of positive electrode materials to fill the aluminum porous body sample 1 with the mixture of positive electrode materials. Then, the aluminum porous body sample 1 was dried at 100°C for 40 minutes to remove the organic solvent, and thereby a positive electrode was completed.

The produced positive electrode had a diameter of 15 mm, and the capacity density per unit area, which is determined from the mass of the positive electrode active material, was designed to be 10 mA/cm². This was used as a positive electrode sample 1.

Further, positive electrode samples 2 and 3 were produced by the same method as in the positive electrode sample 1 except for changing the aluminum porous body sample 1 to aluminum porous body samples 2 and 3.

Moreover, for comparison, a slurry mixture of positive electrode materials (identical to those used in the positive electrode samples 1 to 3) was applied onto the surface of an aluminum foil having a diameter of 15 mm and a thickness of 15 µm, and then dried at 100°C for 40 minutes to remove the organic solvent, and thereby a positive electrode sample 10 was produced. The positive electrode sample 10 had the same thickness as those of the positive electrode samples 1 to 3, and the capacity density per unit area, which is determined from the mass of the positive electrode active material, was designed to be the same as those of the positive electrode samples 1 to 3.

Next, a lithium type battery using each of the positive electrode samples (No. 1 to 3 and 10) was prepared and each of the positive electrode samples was evaluated. Evaluation was carried out for both cases where the positive electrode sample was applied to the positive electrode of an electrolytic solution type lithium ion secondary battery and where the positive electrode sample was applied to the positive electrode of an electrolytic solution type lithium primary battery.

### (Electrolytic Solution Type Lithium Ion Secondary Battery)

An electrolytic solution type lithium ion secondary battery was prepared by the following procedure. A lithium-aluminum (Li-Al) alloy foil (diameter: 15 mm, thickness: 500 µm) was used for the negative electrode, and laminated with a separator made of polypropylene interposed between the positive electrode (positive electrode sample) and the negative electrode. This was housed in a coin type battery case having a positive electrode can and a negative electrode can, respectively made of stainless steel, and then an organic electrolytic solution was poured into the battery case. The organic electrolytic solution was prepared by dissolving LiClO₄ in an amount of 1% by mole in a mixed organic solvent of propylene carbonate and 1,2-dimethoxyethane (1 : 1 by volume). After addition of the organic electrolytic solution, a resin gasket was interposed between the positive electrode can and the negative electrode can, and the positive electrode can and the negative electrode can were caulked with each other to seal the inside to prepare a coin type electrolytic solution type lithium ion secondary battery. Moreover, a battery for evaluation as described above was prepared for each positive electrode sample. The leaf spring was not inserted between the positive electrode sample and the positive electrode can in any positive electrode sample.

The electrolytic solution type lithium ion secondary battery using each positive electrode sample was evaluated in the following manner. A charge/discharge cycle was carried out at a charge/discharge current of 10 µA between 3.3 V and 2.0 V, and each discharge capacity was measured to evaluate performance. Further, charge/discharge efficiency (%) at a depth of discharge of 10% and a depth of discharge of 100% was determined. The depth of discharge referred to herein is a ratio of the discharge capacity to the total discharge capacity, and the charge/discharge efficiency is a ratio of the discharge capacity to the charge capacity at the 1st cycle. The charge/discharge efficiency of the batteries is shown in Table 1.

### (Electrolytic Solution Type Lithium Primary Battery)

An electrolytic solution type lithium primary battery was prepared by the following procedure. A lithium (Li) metal foil (diameter: 15 mm, thickness: 500 µm) was used for the negative electrode, and laminated with a separator made of polypropylene interposed between the positive electrode (positive electrode sample) and the negative electrode. This was housed in a coin type battery case having a positive electrode can and a negative electrode can, respectively made of stainless steel, and then an organic electrolytic solution was poured into the battery case. The organic electrolytic solution was prepared by dissolving LiClO₄ in an amount of 1% by mole in a mixed organic solvent of propylene carbonate and 1,2-dimethoxyethane (1 : 1 by volume). After addition of the organic electrolytic solution, a resin gasket was interposed between the positive electrode can and the negative electrode can, and the positive electrode can and the negative electrode can were caulked with each other to seal the inside to prepare a coin type electrolytic solution type lithium primary battery. Moreover, a battery for evaluation as described above was prepared for each positive electrode sample. The leaf spring was not inserted between the positive electrode sample and the positive electrode can in any positive electrode sample.

The electrolytic solution type lithium primary battery using each positive electrode sample was evaluated in the following manner. Each battery was discharged at discharge current densities of 0.01 mA/cm² and 0.1 mA/cm² from 3.3 V to 2.0 V and each discharge capacity was measured to evaluate performance. Further, the ratio of the discharge capacity to the theoretical capacity derived from the mass of the positive electrode active material was determined. The ratios of the discharge capacity of the batteries are shown in Table 2.

**[Table 1]**

| Positive electrode sample (No.) | Al porous body sample (additive element: atomic %) | Charge/discharge efficiency at depth of discharge 10% (%) | Charge/discharge efficiency at depth of discharge 100% (%) |
|---|---|---|---|
| 1 | Cr: 5 atomic % | 99.99 | 99.99 |
| 2 | Mn: 5 atomic % | 99.99 | 99.99 |
| 3 | Fe: 5 atomic % | 99.99 | 99.99 |
| 10 | aluminum foil | 99.8 | 95.0 |

**[Table 2]**

| Positive electrode sample (No.) | Al porous body sample (additive element: atomic %) | Ratio of discharge capacity at current value 0.01 mA/cm² (%) | Ratio of discharge capacity at current value 0.1 mA/cm² (%) |
|---|---|---|---|
| 1 | Cr: 5 atomic % | 100 | 100 |
| 2 | Mn: 5 atomic % | 100 | 100 |
| 3 | Fe: 5 atomic % | 100 | 100 |
| 10 | aluminum foil | 90 | 75 |

As described above, the positive electrode samples 1 to 3, in which the aluminum porous body samples 1 to 3 of the present invention are used in the current collector, can improve the discharge capacity and the charge/discharge efficiency of a battery and improve the discharge characteristic of a battery, compared with the positive electrode sample 10 of comparative example in which an aluminum foil was used in the current collector. Particularly, even in the conditions of high depth of discharge and high discharge current density, a nonaqueous electrolyte battery having an excellent discharge characteristic can be obtained.

The following reasons are conceivable for this. (i) Since the content of oxygen in the surface of the aluminum porous body serving as a current collector is very low and 3.1% by mass or less, electron transfer between the porous body and the active material is quickly performed. (ii) Since the current collector has a structure in which the aluminum porous body is filled with the active material, in the secondary battery, even when the expansion and shrinkage of the active material occurs in association with charge/discharge, changes in volume (changes in thickness) is small as a whole electrode. On the other hand, in the primary battery, even if the thickness of the negative electrode is decreased in association with progression of discharge, the positive electrode becomes thick so as to compensate for the decrease. Accordingly, defective contact between the electrode and the electrode terminal member hardly occurs and power collection is stabilized. (iii) Since the aluminum porous body is made of an aluminum alloy, the aluminum porous body is superior in mechanical characteristics such as rigidity and elasticity, and therefore the holding performance of the active material is excellent.

### INDUSTRIAL APPLICABILITY

The current collector for a nonaqueous electrolyte battery and the electrode for a nonaqueous electrolyte battery of the present invention can be suitably used for a nonaqueous electrolyte battery used for handheld terminals, electric vehicles and domestic power storage apparatus.

### (REFERENCE SIGNS LIST)

- 1: resin, 1f resin body
- 2: aluminum alloy layer
- 3: aluminum alloy layer-coated resin body
- 4: aluminum porous body
- 5: counter electrode (positive electrode)
- 6: molten salt

## Claims

1. A current collector for a nonaqueous electrolyte battery of an aluminum porous body,
wherein the content of oxygen in the surface of the aluminum porous body is 3.1% by mass or less, and
the aluminum porous body is made of an aluminum alloy containing at least one element selected from the group consisting of Cr, Mn and transition metal elements.

2. The current collector for a nonaqueous electrolyte battery according to claim 1, wherein the transition metal element is at least one element selected from the group consisting of Fe, Co, Ni, Cu and Ti.

3. The current collector for a nonaqueous electrolyte battery according to claim 1 or 2, wherein the aluminum alloy has a structure containing a quasicrystal.

4. An electrode for a nonaqueous electrolyte battery in which an aluminum porous body is filled with an active material,
wherein the aluminum porous body is the current collector for a nonaqueous electrolyte battery according to any one of claims 1 to 3.

5. The electrode for a nonaqueous electrolyte battery according to claim 4, wherein the aluminum porous body is further filled with a solid electrolyte.

6. The electrode for a nonaqueous electrolyte battery according to claim 5, wherein the solid electrolyte is a sulfide-based solid electrolyte containing lithium, phosphorus and sulfur.

7. A nonaqueous electrolyte battery including the electrode for a nonaqueous electrolyte battery according to any one of claims 4 to 6.
